# EUROPEAN PATENT APPLICATION

(11) **EP 4 011 322 A1**
(43) Date of publication of application: **15.06.2022**
(21) Application number: 20000452.1
(22) Date of filing: 11.12.2020
(51) Int. Cl.: A61C 8/00

(54) **TRIPLE A" ANGLED AESTHETIC ABUTMENT**

(71) Applicant: Waschke, Hans Peter, 25335 Bokholt-Hanredder (DE); Heckert, Giovani Cesar, 2640-534 Mafra (PT)
(72) Inventor: Waschke, Hans Peter, 25335 Bokholt-Hanredder (DE); Heckert, Giovani Cesar, 2640-534 Mafra (PT)

(57) **Abstract**

The "Triple A" Angled Aesthetic Abutment System will be used in the area of Implantology, and can be better understood from the attached drawings.

Rotation drawings for single implants (FIG. 1 to 12),
at the angle of 30°, 45° and 90° degrees, with the mounting screw,
as well as the drawings (FIG. 13 to 24) of specifications with angles of 30°, 45° und 90° degrees, for use in multiple implants, with the rotation base and the retraction system of the screw.

It is also possible, the system in addition to the angles indicated in the drawings, to be used in any degree of angle, depending on
the requirements that are between 30° and 90° degrees,
this product will be produced with surgical steel or titanium metal.

The work in the implant system and working time on the patient from the dentist and the dental laboratory are reduced considerably and enable a more efficient and comfortable workflow.

## Description

1. The present "Triple A" Angled Aesthetic Abutment System will be used in the area of Implantology, this innovation refers to a prosthetic component as a base to be used supporting through cementation, single or multiple prostheses in zirconia by the Cad Cam system or in conventional multiple or unitary prostheses, in cases that, for different reasons, the implant was poorly positioned in relation to aesthetics, so that the prosthesis has access to the fixation screw in a location that compromises the aesthetics or even the integrity of the final prosthesis, due to excessive angulation of the prosthetic component, solving the problem with aesthetic and functional results similar to the cases in which the implants are well positioned.

2. Currently the devices or solutions to the problems presented for the current technical situation above have limitations both in relation to the need for highly skilled labor, both in solutions where there are aesthetic, functional and resistance problems of the materials used, giving the idea that the solution will be always a palliative and not definitive.

3. In order to definitively solve the problems arising from prostheses on poorly positioned implants, we developed the present invention, through which we have a system for fixing the abutment to the implant by screws connected by gears that can go from 30° to 90° degrees, giving a versatility to the system, once with the gear system we can always have the position of access to the screw in an aesthetically favourable position, once the access to the screw will always be outside in the anti-aesthetic zone. Another feature that gives greater reliability to the system is the possibility of being able to use a torque wrench to measure the torque force of the screw giving control to the system locking. Under the abutment the prosthesis is made by the conventional system, metal-ceramics or by the Cad Cam system, in zirconia, so the system will be very versatile in choosing the material to be used, with the cementation of this prosthesis being made on the used abutments, also the joint use of the angled abutment together with conventional abutments, as well as the possibility of using various heights of straps at the base of the abutment in addition to the various possible angles.

Within this concept there are two different options, one for cases using prosthesis on single implants, in which we use the fixed gear within the system as shown in the SINGLE ANGLED ABUTMENT drawings, represented keeping the fixation of fixed screw in the position of entry into the implant orifice, the abutment will be positioned on the implant as the screw is tightened, causing the system to descend completely, fixing it on the implant.

The other option will be for cases of prosthesis on multiple implants, in which two or more implants are used together, in this case we have a retractable screw system that gives passivity in the placement of the multiple prosthesis, according to the MULTIPLE ANGLED ABUTMENT drawings, we have a piston internal inside the upper body of the system that slides inside the system as the screw is tightened, causing the entire system that is encapsulated inside the upper body to descend together, as the screw is tightened, which confers an initial passivity in the positioning of the multiple prosthesis. In case of the need to remove the piece, when loosening the screw, the system together also enters the upper body leaving the base of the implant free as the screw is loosened.

At the end of the installation of the prosthesis, whether single or multiple, the accesses to the screw are closed according to the protocol already used by professionals who make prostheses on implants.

4. The invention can be better understood through the attached drawings, with legends specified in the drawing for anti-rotational unitary implants, presented in angles of 30°, 45° and 90° degrees, with the fixed fixation screw and other drawings with similar specifications with angles of 30°, 45° and 90° degrees, for use in multiple implants, with the rotational base and the retraction system of the screw as explained previously.

It will be possible to use the system for angles in addition to those specified in the drawing, which will range from 30° to 90° degrees, according to the market's needs, idealising the production of metals in surgical steel and titanium.

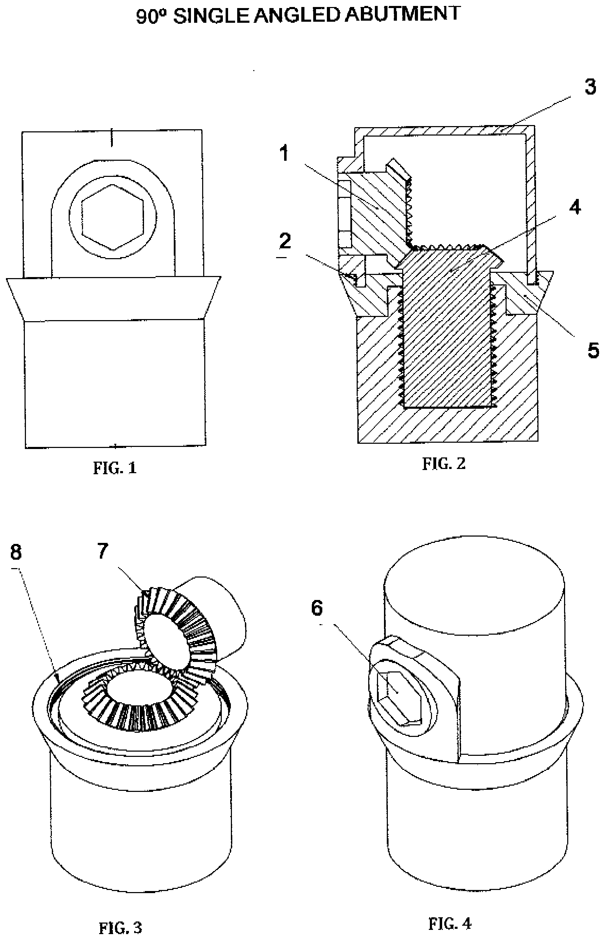

### SINGLE ANGLED ABUTMENT 90°, FIG. 1, 2, 3, 4.

1 - SCREW WITH UPPER GEAR WITH 90° ANGLE AND HEXAGON KEY OPENING, FIG.2
2 - INTERNAL THREAD FOR FIXING THE UPPER BODY TO THE LOWER BASE, FIG.2
3 - UPPER BODY WITH GEAR FIXATION, FIG.2
4 - SCREW WITH LOWER GEAR WITH 90° ANGLE AND FIXATION IN THE IMPLANT, FIG.2
5 - LOWER BASE ON IMPLANT HEAD OR ANTI-ROTATIONAL IMPLANT INTERMEDIATE WITH DIFFERENT BELT HEIGHTS, FIG.2
6 - FITTING THE HEXAGONAL SCREW TIGHTENING WRENCH, FIG.4
7 - CONTACT GEARS AND TIGHTENING WITH 90° ANGLE, FIG.3
8 - INTERNAL FIXING THREAD FOR UNITING THE UPPER BODY WITH THE LOWER BASE, FIG.3

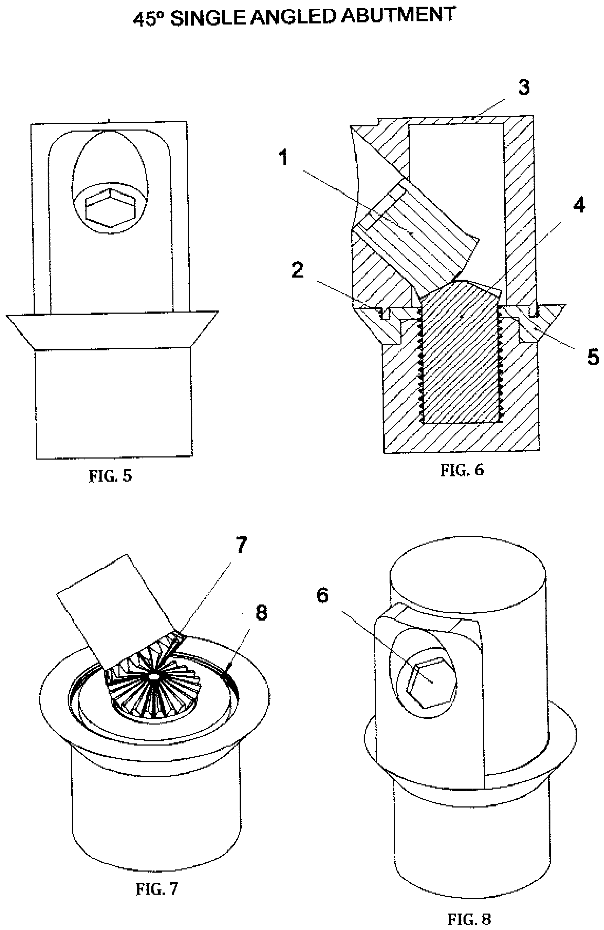

### SINGLE ANGLED ABUTMENT 45°, FIG. 5, 6, 7, 8.

1 - SCREW WITH UPPER GEAR WITH 45° ANGLE AND HEXAGON KEY OPENING, FIG.6
2 - INTERNAL THREAD FOR FIXING THE UPPER BODY TO THE LOWER BASE, FIG.6
3 - UPPER BODY WITH GEAR FIXATION, FIG.6
4 - SCREW WITH LOWER GEAR WITH 45° ANGLE AND FIXATION IN THE IMPLANT, FIG.6
5 - LOWER BASE ON IMPLANT HEAD OR ANTI-ROTATIONAL IMPLANT INTERMEDIATE WITH DIFFERENT BELT HEIGHTS, FIG.6
6 - FITTING THE HEXAGONAL SCREW TIGHTENING WRENCH, FIG.8
7 - CONTACT GEARS AND TIGHTENING WITH 45° ANGLE, FIG.7
8 - INTERNAL FIXING THREAD FOR UNITING THE UPPER BODY WITH THE LOWER BASE, FIG.7

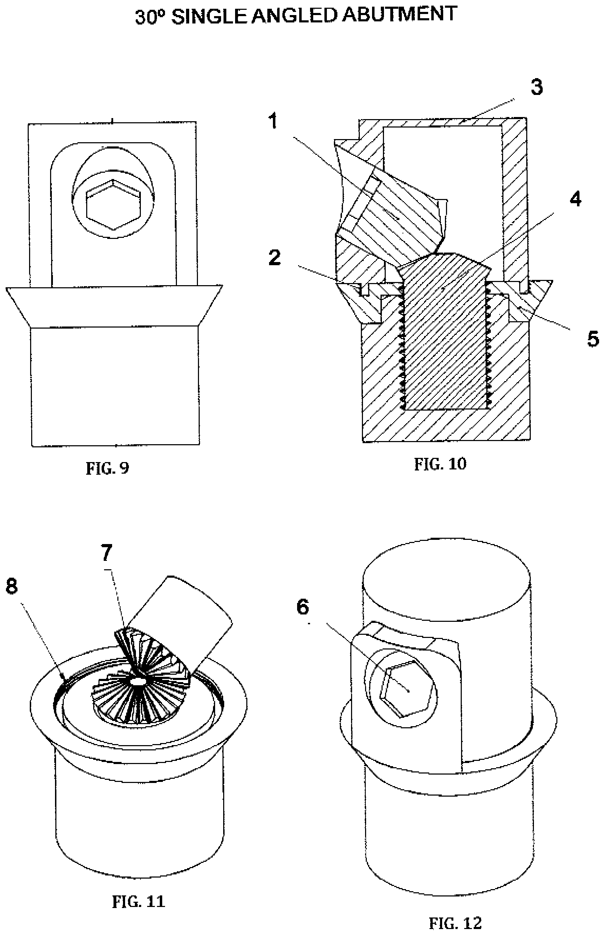

### SINGLE ANGLED ABUTMENT 30°, FIG. 9, 10,11, 12.

1 - SCREW WITH UPPER GEAR WITH 30° ANGLE AND HEXAGON KEY OPENING, FIG.10
2 - INTERNAL THREAD FOR FIXING THE UPPER BODY TO THE LOWER BASE, FIG.10
3 - UPPER BODY WITH GEAR FIXATION, FIG.10
4 - SCREW WITH LOWER GEAR WITH 30° ANGLE AND FIXATION IN THE IMPLANT, FIG.10
5 - LOWER BASE ON IMPLANT HEAD OR ANTI-ROTATIONAL IMPLANT INTERMEDIATE WITH DIFFERENT BELT HEIGHTS, FIG.10
6 - FITTING THE HEXAGONAL SCREW TIGHTENING WRENCH, FIG.12
7 - CONTACT GEARS AND TIGHTENING WITH 30° ANGLE, FIG.11
8 - INTERNAL FIXING THREAD FOR UNITING THE UPPER BODY WITH THE LOWER BASE, FIG.11

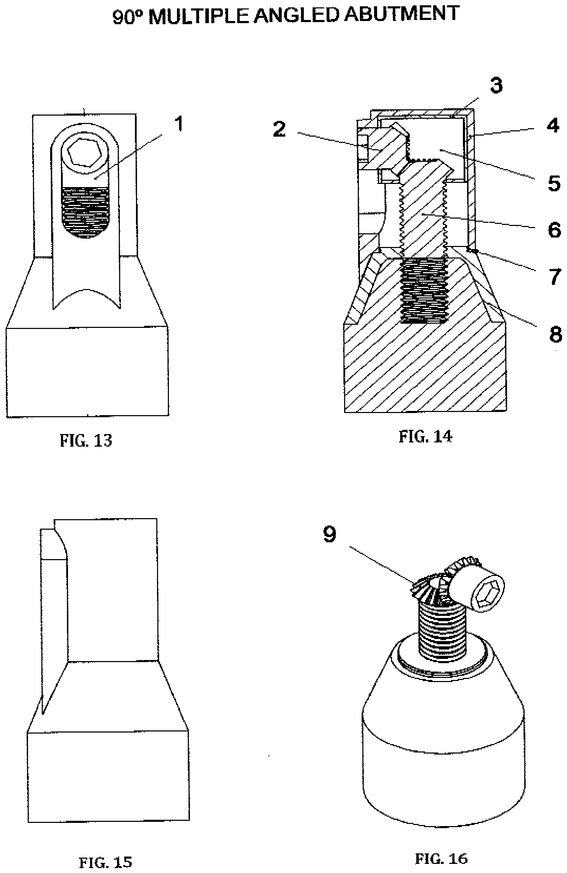

### 90° MULTIPLE RETRACTILE ABUTMENT, FIG. 13, 14, 15, 16.

1 - SCREW DOWN OPENING, FIG.13
2 - SCREW WITH UPPER GEAR WITH 90° ANGLE AND HEXAGON KEY OPENING, FIG.14
3 - RETRACTILE CYLINDER COVER, FIG.14
4 - UPPER BODY OF THE ABUTMENT, FIG.14
5 - RETREAT CYLINDER GEAR SUPPORT, FIG.14
6 - SCREW WITH LOWER GEAR WITH 90° ANGLE AND FIXATION IN THE INTERMEDIATE OF THE IMPLANT, FIG.14
7 - INTERNAL THREAD FOR FIXING THE UPPER BODY TO THE LOWER BASE, FIG.14
8 - LOWER BASE OVER IMPLANT HEAD OR ROTATIONAL IMPLANT INTERMEDIATE WITH DIFFERENT BELT HEIGHTS, FIG.14
9 - CONTACT GEARS AND TIGHTENING WITH 90° ANGLE, FIG.16

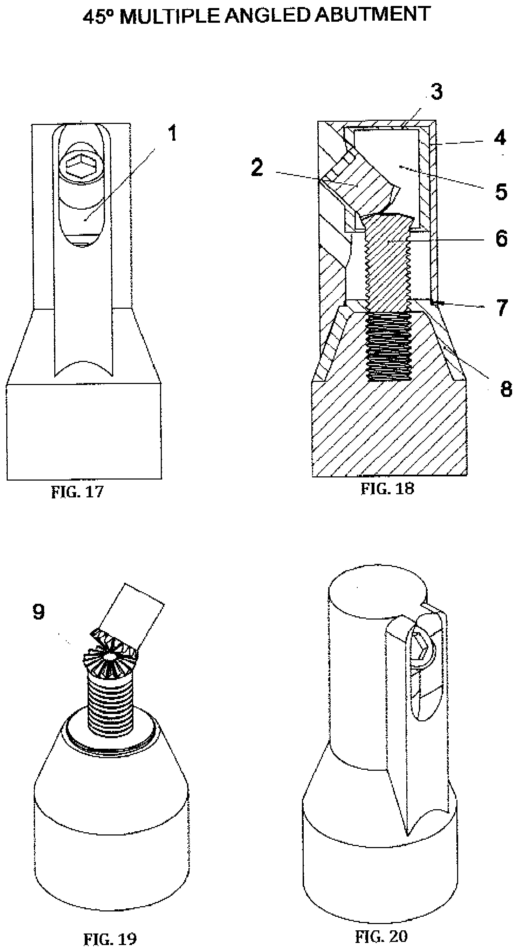

### 45° MULTIPLE RETRACTILE ABUTMENT, FIG. 17, 18, 19, 20.

1 - SCREW DOWN OPENING, FIG.17
2 - SCREW WITH UPPER GEAR WITH 45° ANGLE AND HEXAGON KEY OPENING, FIG.18
3 - RETRACTILE CYLINDER COVER, FIG.18
4 - UPPER BODY OF THE ABUTMENT, FIG.18
5 - RETREAT CYLINDER GEAR SUPPORT, FIG.18
6 - SCREW WITH LOWER GEAR WITH 45° ANGLE AND FIXATION IN THE INTERMEDIATE OF THE IMPLANT, FIG.18
7 - INTERNAL THREAD FOR FIXING THE UPPER BODY TO THE LOWER BASE, FIG.18
8 - LOWER BASE OVER IMPLANT HEAD OR ROTATIONAL IMPLANT INTERMEDIATE WITH DIFFERENT BELT HEIGHTS, FIG.18
9 - CONTACT GEARS AND TIGHTENING WITH 45° ANGLE, FIG.19

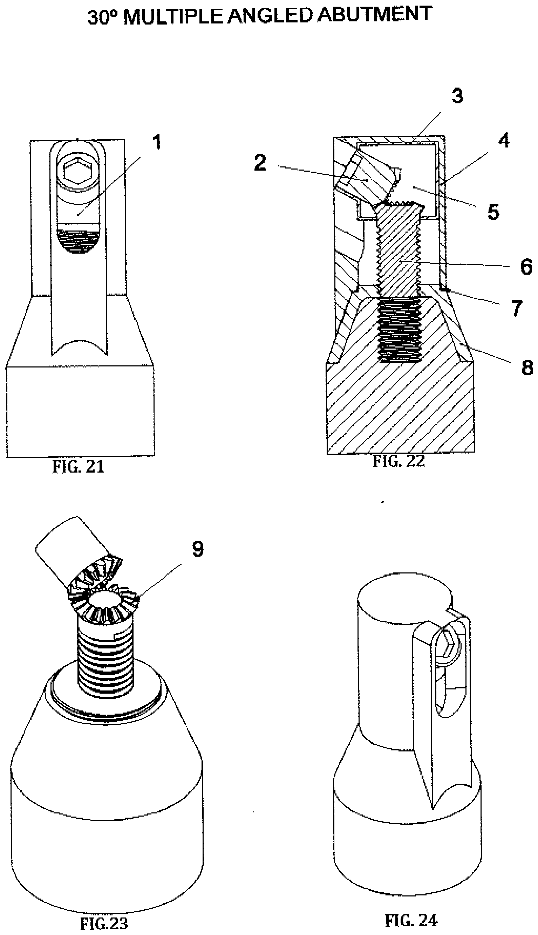

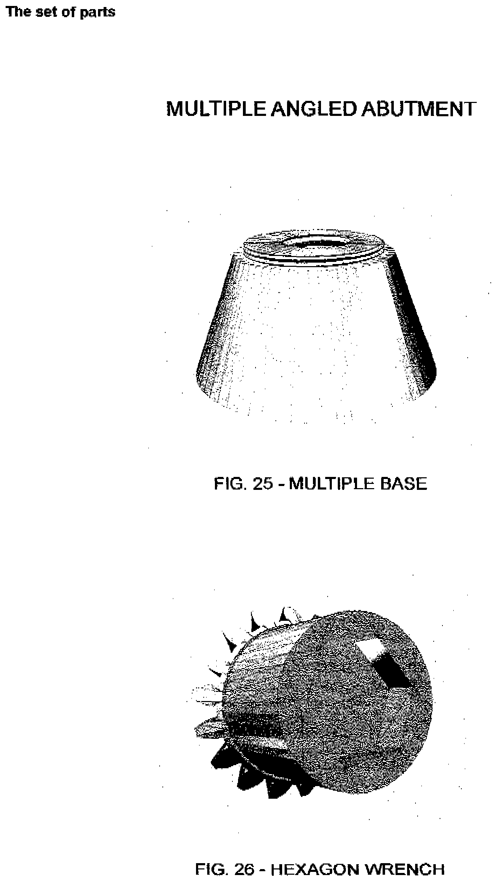

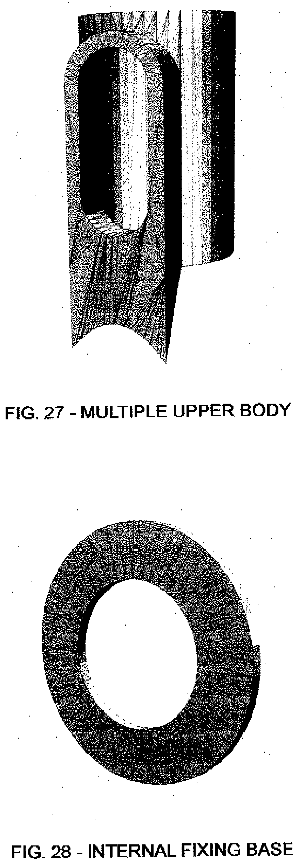

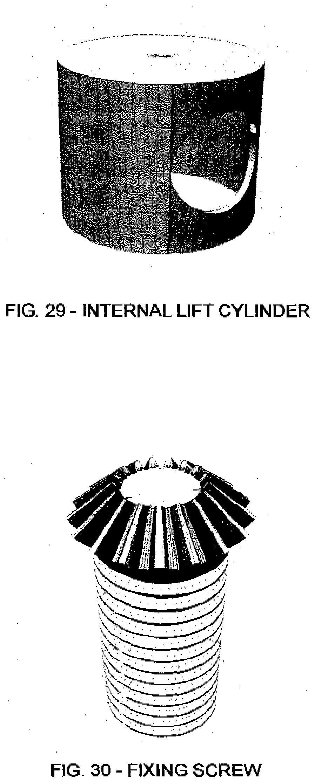

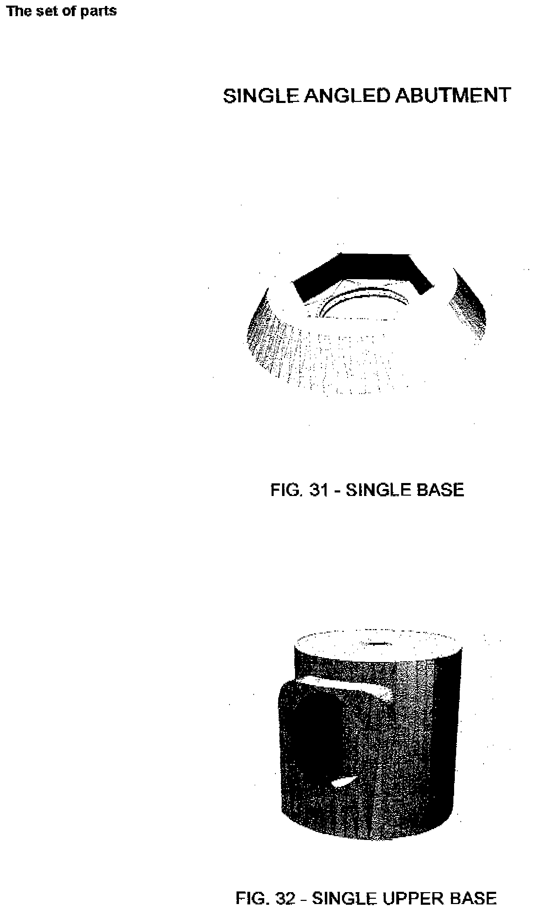

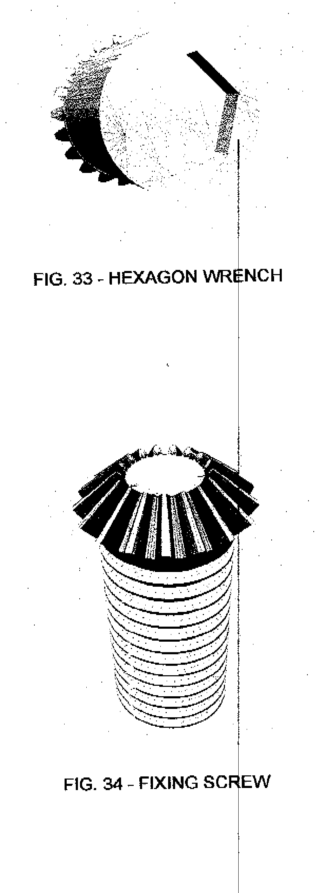

### 30° MULTIPLE RETRACTILE ABUTMENT, FIG. 21, 22, 23, 24.

1 - SCREW DOWN OPENING, FIG.21
2 - SCREW WITH UPPER GEAR WITH 30° ANGLE AND HEXAGON KEY OPENING, FIG.22
3 - RETRACTILE CYLINDER COVER, FIG.22
4 - UPPER BODY OF THE ABUTMENT. FIG.22
5 - RETREAT CYLINDER GEAR SUPPOR, FIG.22
6 - SCREW WITH LOWER GEAR WITH 30° ANGLE AND FIXATION IN THE INTERMEDIATE OF THE IMPLANT. FIG.22
7 - INTERNAL THREAD FOR FIXING THE UPPER BODY TO THE LOWER BASE, FIG.22
8 - LOWER BASE OVER IMPLANT HEAD OR ROTATIONAL IMPLANT INTERMEDIATE WITH DIFFERENT BELT HEIGHTS, FIG.22
9 - CONTACT GEARS AND TIGHTENING WITH 30° ANGLE, FIG.23

## Claims

1. Complete "Triple A" Angled Aesthetic Abutment, MULTIPLE ANGLED ABUTMENT.
Consists of the components:

2. FIG. 25 - MULTIPLE BASE. This piece makes the union of the angled system with the implant head or the intermediate that is used, being able to be made on any commercial implant platform, it has a thread that guarantees the union with the upper body.

3. FIG. 26 - HEXAGON WRENCH. This part will transmit the torque made by the wrench, through the coupling of the hexagonal wrench used by the dentist, transferring the rotational movement to the gear and in turn making the clamping or loosening movement on the fixing screw.

4. FIG. 27 - MULTIPLE UPPER. This part will receive the gears as well as the retraction system of the fixing screw, being threaded to the base externally closing the body of the angled part, with the appropriate shape for the subsequent placement of a crown or fixed bridge structure.

5. FIG. 28 - INTERNAL FIXING BASE. This part closes the internal lift cylinder, the fixing screw comes out of it and it supports the coupling of the gears when the internal lift retracts the screw or extends it.

6. FIG. 29 - INTERNAL LIFT CYLINDER. This part is responsible for the retraction and extension of the fixing screw, maintaining the union of the gears in any position.

7. FIG. 30 - FIXING SCREW. This part receives the torsion through the torque exerted by tightening or loosening the whole set, it is responsible for the correct fixation of the whole part.

8. Complete "Triple A" Angled Aesthetic Abutment, SINGLE ANGLED ABUTMENT.
Consists of the components:

9. FIG. 31 - SINGLE BASE. This part is responsible for coupling the upper body to the implant or implant intermediary, making it possible to make it on any implant platform on the market.

10. FIG. 32 - SINGLE UPPER BASE. This part joins the base and supports the fixing screws and the tightening wrench maintaining the union of the gears and the correct position for tightening, there is no retraction / extension mechanism in this part, it works directly on the implant with the screw at maximum extension.

11. FIG. 33 - HEXAGON WRENCH. This part will transmit the torque made by the wrench, through the coupling of the hexagonal wrench used by the dentist, transferring the rotational movement to the gear and in turn making the tightening or loosening movement on the fixing screw.

12. FIG. 34 - FIXING SCREW. This part receives the torsion through the torque exerted, by tightening or loosening the whole set, it is responsible for the correct fixation of the whole part.
